# EUROPÄISCHE PATENTSCHRIFT

(11) **EP 0 252 063 B1**
(45) Veröffentlichungstag und Bekanntmachung des Hinweises auf die Patenterteilung: **29.09.1993**
(21) Anmeldenummer: 87890129.7
(22) Anmeldetag: 10.06.1987
(51) Int. Cl.: C12C 5/00, C12G 3/02

(54) **Kohlensäure und Koffein enthaltendes Getränk**
Carbonic aciol and coffeine containing beverage
Boisson contenant de l'acide carbonique et de la cofeine

(30) Priorität: 10.06.1986 AT 1562/86
(43) Veröffentlichungstag der Anmeldung: 07.01.1988
(73) Patentinhaber: Turnauer, Herbert, A-1190 Wien (AT)
(72) Erfinder: Turnauer, Herbert, A-1190 Wien (AT)
(74) Vertreter: Stampfer, Heinz

(56) Entgegenhaltungen:
- DE-A- 1 442 279
- DE-A- 1 939 473
- DE-B- 1 061 727
- DE-C- 811 225
- FR-A- 382 040
- FR-A- 413 470

## Beschreibung

Die Erfindung betrifft ein Kohlensäure und Koffein enthaltendes Getränk.

Bekannte Getränke dieser Art sind die Cola-Getränke. Sie werden durch Verdünnung von sogenannten Cola-Sirupen bei gleichzeitigem Zusatz von Kohlensäure erzeugt. Diese Cola-Sirupe werden aus Sirupen aus Zucker oder Zuckerarten unter Mitverwendung von natürlichen Grundstoffen und Koffein hergestellt, wobei auch Genußsäuren und Phosphorsäure zugegeben werden können.

Wegen ihres Zuckergehaltes haben die Cola-Getränke einen im wesentlichen süßen Geschmack und treffen aus diesem Grunde die Geschmacksrichtung nur eines Teiles der Konsumenten.

Der Erfindung liegt nun die Aufgabe zugrunde, ein Getränk der oben genannten Art anzugeben, das einen bitteren erfischenden Geschmack aufweist.

Die Aufgabe wird gemäß Anspruch 1 dadurch gelöst, daß es aus Bier, hergestellt auf Basis von Hopfen und Malz, besteht, dem Koffein in einer Menge von 65 bis 150 mg/l zugesetzt wurde. Der bittere erfrischende Biergeschmack bleibt hier voll erhalten.

Aus der DE-A-1442279 ist zwar die Herstellung eines Bieres bekannt, bei dem die verwendeten Rohstoffe als Konzentrate vorliegen. Dabei können z.B. auch Kaffee, der Koffein enthält, zugegeben werden. Diese Zugabe erfolgt hier aber, im Gegensatz zur Erfindung, mit dem ausdrücklichen Zweck, die Geschmacksrichtung des Bieres zu verändern.

Die Erfindung wird nachstehend anhand einiger Beispiele erläutert.

Beispiel 1: Ein Gerstenbier mit einer 9grädigen Stammwürze wird in üblicher Weise gebraut. Nach dem Gärungsvorgang und der Filtration des Bieres werden diesem pro Liter 120 mg Koffein zugesetzt und das so hergestellte Getränk in Flaschen abgefüllt. Der der 9grädigen Stammwürze entsprechende Alkoholgehalt des Getränkes beträgt 3 Vol.%. Bei Genuß dieses Getränkes,das wie Bier schmeckt, wird die nach einem Biergenuß bei manchen Menschen auftretende Müdigkeit durch die anregende Wirkung des Koffeins zumindest zu einem großen Teil kompensiert.

Beispiel 2: Einem nach Art eines Bieres auf Basis von Gerstenmalz und Hopfen in an sich bekannter Weise hergestellten Gärungsprodukt, das einen Alkoholgehalt von 0,3 Vol.% aufweist, werden pro Liter 80 mg Koffein Zugesetzt und das so hergestellte Getränk abgefüllt. Dieses Getränk gilt wegen seines sehr geringen Alkoholgehalts bereits praktisch als alkoholfrei.

Beispiel 3: Einem auf übliche Weise gebrauten Weizenbier werden pro Liter Bier 100 mg Koffein und eine orangefärbende Lebensmittelfarbe in einer Menge zugesetzt, daß das resultierende Getränk eine kräftig orangerote Farbe aufweist. Wegen der hellen Grundfarbe des Weizenbiers ist die Einstellung der gewünschten Färbung des Getränkes auch auf andere Farben bzw. Farbtöne relativ leicht durchführbar.

## Patentansprüche

1. Kohlensäure und Koffein enthaltendes Getränk, dadurch gekennzeichnet, daß es aus einem auf Basis von Hopfen und Malz hergestellten Bier besteht, dem Koffein in einer Menge von 65 bis 150 mg/l zugesetzt wurde.

2. Getränk nach Anspruch 1, dadurch gekennzeichnet, daß es einen Alkoholgehalt zwischen 0 und 0,5 Vol.% aufweist.

3. Getränk nach Anspruch 1, dadurch gekennzeichnet, daß es einen Alkoholgehalt von mehr als 0,5 Vol.% aufweist.

4. Getränk nach Anspruch 3, dadurch gekennzeichnet, daß es einen Alkoholgehalt zwischen 0,5 und 3,7 Vol.%, vorzugsweise aber zwischen 0,5 und 1,9 Vol.% aufweist.

5. Getränk nach einem der Ansprüche 1, 3 und 4, dadurch gekennzeichnet, daß das Bier ein untergäriges Bier ist.

6. Getränk nach einem der Ansprüche 1, 3 und 4, dadurch gekennzeichnet, daß das Bier ein Weizenbier ist.

7. Getränk nach einem der Ansprüche 1 - 6, dadurch gekennzeichnet, daß es zusätzlich Lebensmittelfarben enthält.

## Claims

1. A drink containing carbon dioxide and caffeine, characterized in that it consists of a beer produced on the basis of hops and malt, to which caffeine has been added in a quantity of 65 to 150 mg/l.

2. A drink according to Claim 1, characterised in that it has an alcohol content of between 0 and 0.5% by volume.

3. A drink according to Claim 1, characterised in that it has an alcohol content of more than 0.5% by volume.

4. A drink according to Claim 3, characterised in that it has an alcohol content of between 0.5 and 3.7% by volume, but preferably between 0.5 and 1.9% by volume.

5. A drink according to one of Claims 1, 3 and 4, characterised in that the beer is a bottom-fermented beer.

6. A drink according to one of Claims 1, 3 and 4, characterised in that the beer is a wheat beer.

7. A drink according to one of Claims 1 to 6, characterised in that it additionally contains food colourings.

## Revendications

1. Boisson contenant du gaz carbonique et de la caféine, caractérisée en ce qu'elle est constituée d'une bière brassée à partir de houblon et de malte, à laquelle est ajoutée de la caféine à raison de 65 à 150 mg/l.

2. Boisson selon la revendication 1, caractérisée en ce qu'elle présente une teneur en alcool comprise entre 0 et 0,5% en volume.

3. Boisson selon la revendication 1, caractérisée en ce qu'elle présente une teneur en alcool de plus de 0,5% en volume.

4. Boisson selon la revendication 3, caractérisée en ce qu'elle présente une teneur en alcool comprise entre 0,5 et 3,7% en volume, de préférence cependant, entre 0,5 et 1,9% en volume.

5. Boisson selon l'une des revendications 1, 3 et 4, caractérisée en ce que la bière est une bière à basse fermentation.

6. Boisson selon l'une des revendications 1, 3 et 4, caractérisée en ce que la bière est une bière de froment.

7. Boisson selon l'une des revendications 1 à 6, caractérisée en ce qu'elle contient en outre des colorants alimentaires.
